(19) Europäisches Patentamt
European Patent Office
Office européen des brevets

(11) EP 1 082 353 B1

(12) EUROPÄISCHE PATENTSCHRIFT

(45) Veröffentlichungstag und Bekanntmachung des Hinweises auf die Patenterteilung:
**22.02.2006 Patentblatt 2006/08**

(21) Anmeldenummer: **99953341.7**

(22) Anmeldetag: **18.05.1999**

(51) Int Cl.:
***C08F 4/52*** (2006.01) ***C08F 4/646*** (2006.01)
***C08F 110/06*** (2006.01)

(86) Internationale Anmeldenummer:
**PCT/EP1999/003416**

(87) Internationale Veröffentlichungsnummer:
**WO 1999/061487 (02.12.1999 Gazette 1999/48)**

# (54) KATALYSATORSYSTEM UND SEINE VERWENDUNG ZUR POLYMERISATION VON PROPYLEN

CATALYST SYSTEM AND THE USE OF SAID CATALYST SYSTEM FOR POLYMERISING PROPYLENE

SYSTEME DE CATALYSEUR ET SON UTILISATION POUR LA POLYMERISATION DE PROPYLENE

(84) Benannte Vertragsstaaten:
**DE ES FR GB IT NL**

(30) Priorität: **23.05.1998 DE 19823172**
**23.05.1998 DE 19823171**

(43) Veröffentlichungstag der Anmeldung:
**14.03.2001 Patentblatt 2001/11**

(73) Patentinhaber: **Basell Polyolefine GmbH**
**50389 Wesseling (DE)**

(72) Erfinder:
- **BOHNEN, Hans**
  **D-47441 Moers (DE)**
- **GÖRES, Markus**
  **D-65760 Eschborn (DE)**
- **FRITZE, Cornelia**
  **D-60529 Frankfurt am Main (DE)**

(56) Entgegenhaltungen:
**EP-A1- 0 576 970**
**EP-A2- 0 601 830**
**WO-A1-96/00243**
**WO-A1-96/04290**
**WO-A1-99/40129**
**DE-A1- 19 733 017**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Katalysatorsysteme und ihre Verwendung in der Polymerisation von Propylen.

Verfahren zur Herstellung von Polyolefinen mit Hilfe von löslichen, homogenen Katalysatorsystemen, bestehend aus einer Übergangsmetallkomponente vom Typ eines Metallocens und einer Cokatalysator-Komponente vom Typ eines Aluminoxans, einer Lewis-Säure oder einer ionischen Verbindung sind bekannt. Diese Katalysatoren liefem bei hoher Aktivität Polymere und Copolymere mit enger Motmassenverteilung.

Bei Polymerisationsverfahren mit löslichen, homogenen Katalysatorsystemen bilden sich starke Beläge an Reaktorwänden und Rührer aus, wenn das Polymer als Feststoff anfällt Diese Beläge entstehen immer dann durch Agglomeration der Polymerpartikel, wenn Metallocen und/oder Cokatalysator gelöst in der Suspension vorliegen. Derartige Beläge in den Reaktorsystemen müssen regelmäßig entfernt werden, da diese rasch erhebliche Stärken erreichen, eine hohe Festigkeit besitzen und den Wärmeaustausch zum Kühlmedium verhindern. Industriell in den modernen Polymerisationsverfahren in flüssigem Monomer oder in der Gasphase sind solche homogenen Katalysatorsysteme nicht einsetzbar.

Zur Vermeidung der Belagbildung im Reaktor sind geträgerte Katalysatorsysteme vorgeschlagen worden, bei denen das Metallocen und/oder die als Cokatalysator dienende Aiuminiumverbindung auf einem anorganischen Trägermaterial fixiert werden.

Aus EP-A-0,576,970 sind Metallocene und entsprechende geträgerte Katalysatorsysteme bekannt.

Hochaktive geträgerte Katalysatorsysteme zur Darstellung von technisch relevanten Polyolefinen mit hoher Taktizität und hohem Schmelzpunkt, insbesondere von Polypropylenen, enthalten ansa-Metallocene in racemischer bzw. pseudoracemischer Form und sind beispielsweise aus EP-A-0,530,647; EP-A-0,576;970 und EP-A-0,653,433 bekannt

Ansa-Metallocene fallen in der Synthese als lsomerengemische (rac-Form und meso-Form bzw. pseudo-rac-/pseudo-meso-Form) an, so daß ein zusätzlicher und aufwendiger Verfahrensschritt zur Trennung von rac- und meso-Form (bzw. der pseudo-Formen) notwendig ist. Eine Defintion der Begriffe rac- bzw. Meso-Form ist Brinzinger et al., Joumal of Organometallic Chemistry, 232 (1982) Seite 233 und Schlögl, Top. Stereochem., 1 (1967) Seite 39 ff. zu entnehmen.

Außerdem hat Methylaluminiumoxan (MAO) als bisher wirksamster Cokatalysator den Nachteil in hohem Überschuß eingesetzt werden zu müssen. Derartige Aluminoxane werden beispielsweise in JACS 117 (1995), 6465-74, Organometallics 13 (1994), 2957-2969, beschrieben.
Die Darstellung kationischer Alkylkomplexe eröffnet den Weg MAO freie Katalysatoren mit vergleichbarer Aktivität zu erhalten, wobei der Cokatalysator nahezu stöchiometrisch eingesetzt werden kann.

Eine industrielle Nutzung von Metallocen-Katalysatoren fordert wie bereits beschrieben eine Heterogenisierung des Katalysatorsystems, um eine entsprechende Morphologie des resultierenden Polymers zu gewährleisten. Die Trägerung von kationischen Metallocen-Katalysatoren auf Basis von Borat-Anionen ist in WO-91/09882 beschrieben. Dabei wird das Katalysatorsystem, durch Aufbringen einer Dialkylmetallocen-Verbindung und einer Brönsted-sauren, quatären Ammonium-Verbindung, mit einem nichtkoordinierenden Anion wie Tetrakispentafluorphenytborat, auf einen anorganischen Träger, gebildet. Das Trägermaterial wird zuvor mit einer Trialkylaluminium-Verbindung modifiziert. Nachteil dieses Trägerungsverfahrens ist, daß nur ein geringer Teil des eingesetzten Metallocens durch Physisorbtion an einem Trägermaterial fixiert ist. Bei der Dosierung des Katalysatorsystems in den Reaktor kann dann das Metallocen leicht von der Trägeroberfläche abgelöst werden. Dies führt zu einer teilweise homogen verlaufenden Polymerisation, was eine unbefriedigende Morphologie des Polymers zur Folge hat.

Es bestand somit die Aufgabe, ein kostengünstiges, hochaktives Katalysatorsystem zur Herstellung von Polypropylen mit hoher Taktizität und hohem Schmelzpunkt zu finden sowie ein einfaches und wirtschaftliches Verfahren zur Herstellung eines solchen Katalysatorsystems, das keine zusätzliche Trennung von rac- und meso-Form der enthaltenen Metallocenkomponenten erfordert und auf Aluminoxane wie Methylaluminoxan (MAO) als CoKatalysator verzichtet.

Überraschenderweise wurde nun gefunden, daß durch ein Katalysatorsystem, das mindestens ein Metallocen als rac-meso-Isomerengemisch, mindestens eine Organoboraluminiumverbindung, mindestens einen inertisierten Träger, mindestens eine Lewis Base und gegebenenfalls mindestens eine weitere Organometallverbindung enthält, die der Erfindung zugrunde liegende Aufgabe gelöst wird.

Die vorliegende Erfindung betrifft somit ein Katalysatorsystem enthaltend

a) mindestens ein substituiertes Metallocen der Formel A

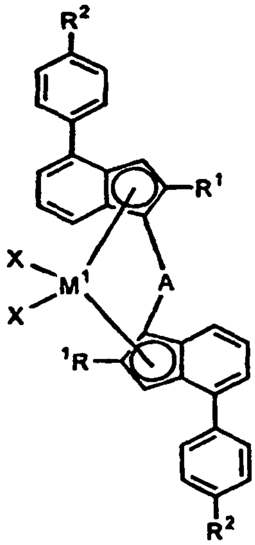

(A)

worin

$R^1$ und $R^2$ gleich oder verschieden sind und ein Wasserstoffatom, eine $C_1$-$C_{20}$-Kohlenwasserstoffgruppe wie beispielsweise eine $C_1$-$C_{20}$-Alkylgruppe, bevorzugt Methyl, Ethyl, n-Propyl, iso-Propyl, n-Butyl, sec-Butyl, iso-Butyl, tert.-Butyl, Pentyl und Hexyl, eine $C_6$-$C_{14}$-Arylgruppe, eine $C_2$-$C_{20}$-Alkenylgruppe, mit der Einschränkung, daß $R^1$ nicht Methyl ist, wenn $R^2$ gleich Wasserstoff ist,

$M^1$ ein Übergangsmetall der Gruppe 4, 5 oder 6 des Periodensystems der Elemente ist, wie beispielsweise Titan, Zirkonium, Hafnium, Vanadium, Niob, Tantal, Chrom, Molybdän oder Wolfram, bevorzugt Titan, Zirkonium, Hafnium, besonders bevorzugt Zirkonium, ist,

A eine Verbrückung der Formel

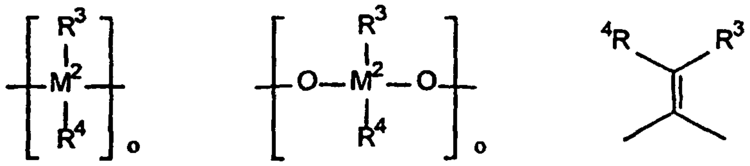

oder $=BR^3$, $AlR^3$, -S-, -SO-, $-SO_2-$, $=NR^3$, $=PR^3$, $=P(O)R^3$, o-Phenylen, 2,2'-Biphenylen ist, worin

$M^2$ Kohlenstoff, Silizium, Germanium, Zinn, Stickstoff oder Phosphor ist, bevorzugt Kohlenstoff, Silizium oder Germanium, insbesondere Kohlenstoff oder Silizium,

o gleich 1, 2, 3 oder 4 ist, bevorzugt 1 oder 2,

$R^3$ und $R^4$ unabhängig voneinander gleich oder verschieden ein Wasserstoffatom, Halogen, eine $C_1$-$C_{20}$-kohlenstoffhaltige Gruppe wie ($C_1$-$C_{20}$)-Alkyl, insbesondere eine Methylgruppe, ($C_6$-$C_{14}$)-Aryl, insbesondere eine Phenyl- oder Naphthylgruppe, ($C_1$-$C_{10}$)-Alkoxy, ($C_2$-$C_{10}$)-Alkenyl, ($C_7$-$C_{20}$)-Arylalkyl, ($C_7$-$C_{20}$)-Alkylaryl, ($C_6$-$C_{10}$)-Aryloxy, ($C_1$-$C_{10}$)-Fluoralkyl, ($C_6$-$C_{10}$)-Halogenaryl, ($C_2$-$C_{10}$)-Alkinyl, $C_3$-$C_{20}$-Alkylsilyl- wie beispielsweise Trimethylsilyl, Triethylsilyl, tert.-Butyldimethylsilyl, $C_3$-$C_{20}$-Arylsilyl- wie beispielsweise Triphenylsityl, oder $C_3$-$C_{20}$- Alkylarylsilyl- wie beispielsweise Dimethylphenylsilyl, Diphenylsilyl oder Diphenyl-tert.-butylsilyl bedeuten und $R^3$ und $R^4$ gemeinsam ein mono- oder polycyclisches Ringsystem bilden können, und

A bevorzugt für Dimethylsilandiyl, Dimethylgermandiyl, Ethyliden, Methylethyliden, 1,1-Dimethylethyliden, 1,2-Dimethytethyliden, Tetramethylethyliden, Isopropyliden, Phenylmethylmethyliden, Diphenylmethyliden, besonders bevorzugt Dimethylsilandiyl, Dimethylgermandiyl oder Ethyliden, steht,

X gleich oder verschieden für ein Wasserstoffatom, ein Halogenatom wie Fluor, Chlor, Brom oder Iod, eine Hydroxylgruppe, eine $C_1$-$C_{10}$-Alkylgruppe wie beispielsweise Methyl, Ethyl, Propyl, iso-Propyl, n-Butyl, iso-Butyl, sec-Butyl, tert.-Butyl, Hexyl, Cyclohexyl, eine $C_6$-$C_{15}$-Arylgruppe wie beispielsweise

Phenyl, Naphthyl, eine $C_1$-$C_{10}$-Alkoxygruppe wie beispielsweise Methoxy, Ethoxy, tert.-Butoxy, eine $C_6$-$C_{15}$-Aryloxygruppe, eine Benzylgruppe, eine $NR^5_2$-Gruppe, wobei $R^5$ gleich oder verschieden eine $C_1$-$C_{10}$-Alkylgruppe, insbesondere Methyl und/oder Ethyl, eine $C_6$-$C_{15}$-Arylgruppe, eine $(CH_3)_3Si$-Gruppe steht, bevorzugt ein Chloratom, ein Fluoratom, eine Methylgruppe, eine Benzylgruppe, eine $NMe_2$-Gruppe, besonders bevorzugt ein Chloratom oder eine Methylgruppe, steht,

wobei das Verhältnis von rac-Isomer zu meso-Isomer des Metallocens der Formel (A) im erfindungsgemäßen Katalysatorsystem zwischen 1:10 und 2:1, bevorzugt zwischen 1:2 und 3:2, liegt,
b) mindestens eine Lewis-Base der Formel I,

$$M^3R^6R^7R^8 \qquad (I)$$

worin
$R^6$, $R^7$ und $R^8$ gleich oder verschieden sind und für ein Wasserstoffatom, eine $C_1$-$C_{20}$-Alkyl-, $C_1$-$C_{20}$-Halogenalkyl-, $C_6$-$C_{40}$-Aryl-, $C_6$-$C_{40}$-Halogenaryl-, $C_7$-$C_{40}$-Alkylaryl- oder $C_7$-$C_{40}$-Arylalkyl-Gruppe stehen, wobei gegebenenfalls zwei Reste oder alle drei Reste $R^6$, $R^7$ und $R^8$ über $C_2$-$C_{20}$-Kohlenstoffeinheiten miteinander verbunden sein können und
$M^3$ für ein Element der V. Hauptgruppe des Periodensystems der Elemente steht,
c) einen Träger,
d) mindestens eine Organoboraluminium-Verbindung, die aus Einheiten der Formel II

$$R_i^9M^4\text{-O-}M^4R_j^{10} \qquad (II)$$

worin

| | |
|---|---|
| $R^9$ und $R^{10}$ | gleich oder verschieden sind und ein Wasserstoffatom, ein Halogenatom, eine $C_1$-$C_{40}$-kohlenstoffhaltige Gruppe, insbesondere $C_1$-$C_{20}$-Alkyl, $C_1$-$C_{20}$-Halogenalkyl, $C_1$-$C_{1O}$-Alkoxy, $C_6$-$C_{20}$-Aryl, $C_6$-$C_{20}$-Halogenaryl, $C_6$-$C_{20}$-Aryloxy, $C_7$-$C_{40}$-Arylalkyl, $C_7$-$C_{40}$-Halogenarylalkyl, $C_7$-$C_{40}$-Alkylaryl, $C_7$-$C_{4o}$-Halogenalkylaryl sind oder $R^9$ kann eine -$OSiR_3$-Gruppe sein, worin R gleich oder verschieden sind und die gleiche Bedeutung wie $R^9$ haben, |
| $M^4$ | gleich oder verschieden ist und für ein Element der 3. Hauptgruppe des Periodensystems der Elemente steht und |
| i und j | jeweis eine ganze Zahl 0, 1 oder 2 steht, |

aufgebaut ist und die kovalent an den Träger gebunden ist,
sowie gegebenenfalls
e) eine Organometallverbindung der Formel V

$$[M^5R^{11}{}_p]_k \qquad (V)$$

worin

| | |
|---|---|
| $M^5$ | ein Element der I., II. und III. Hauptgruppe des Periodensystems der Elemente ist, |
| $R^{11}$ | gleich oder verschieden ist und ein Wasserstoffatom, ein Halogenatom, eine $C_1$-$C_{40}$-kohlenstoffhaltige Gruppe, insbesondere $C_1$-$C_{20}$- Alkyl-, $C_6$-$C_{40}$-Aryl-, $C_7$-$C_{40}$-Aryl-alkyl oder $C_7$-$C_{40}$-Alkyl-aryl-Gruppe bedeutet, |
| p | eine ganze Zahl von 1 bis 3 und |
| k | ist eine ganze Zahl von 1 bis 4 ist. |

Bevorzugt handelt es sich bei den Lewis-Basen der Formel (I) um solche bei denen M3 für Stickstoff oder Phosphor steht. Beispiele für derartige Verbindungen sind Triethylamin, Trüsopropylamin, Trüsobutylamin, Tri(n-butyl) amin, N,N-Dimethylanilin, N,N-Diethylanilin, N,N-2,4,6-Pentamethylanilin, Dicyclohexylamin, Pyridin, Pyrazin, Triphenylphosphin, Tri(methylphenyl)phosphin und Tri(dimethylphenyl)phosphin. Die Trägerkomponente des erfindungsgemäßen Katalysatorsystems kann ein benebiger organischer oder anorganischer, inerter Feststoff sein, insbesondere ein poröser Träger wie Talk, anorganische Oxide und feinteilige Polymerpulver (z.B. Polyolefine).

Geeignete anorganische Oxide finden sich in den Gruppen 2,3,4,5,13,14,15 und 16 des Periodensystems der Elemente. Beispiele für als Träger bevorzugte Oxide umfassen Siliciumdioxid, Aluminiumoxid, sowie Mischoxide der beiden Elemente und entsprechende Oxid-Mischungen. Andere anorganische Oxide, die allein oder in Kombination mit den zuletzt genannten bevorzugten oxiden Trägern eingesetzt werden können, sind z.B. MgO, $ZrO_2$ , $TiO_2$ oder $B_2O_3$ ,

um nur einige zu nennen.

Die verwendeten Trägermaterialien weisen eine spezifische Oberfläche im Bereich von 10 bis 1000 $m^2$/g, ein Porenvolumen im Bereich von 0,1 bis 5 ml/g und eine mittlere Partikelgröße von 1 bis 500 µm auf. Bevorzugt sind Träger mit einer spezifischen Oberfläche im Bereich von 50 bis 500 µm, einem Porenvolumen im Bereich zwischen 0,5 und 3,5 ml/g und einer mittleren Partikelgröße im Bereich von 5 bis 350 µm. Besonders bevorzugt sind Träger mit einer spezifischen Oberfläche im Bereich von 200 bis 400 $m^2$/g, einem Porenvolumen im Bereich zwischen 0,8 bis 3,0 ml/g und einer mittleren Partikelgröße von 10 bis 200 µm.

Wenn das verwendete Trägermaterial von Natur aus einen geringen Feuchfigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium- , Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösemittel mit dem Inertisierungsreagenz in reiner Form oder gelöst in einem geeigneten Lösemittel zur Reaktion bringt. Geeignete Lösemittel sind z.B. aliphatische oder aromatische Kohlenwasserstoffe wie Pentan, Hexan, Heptan, Toluol oder Xylol. Die Inertisierung erfolgt bei Temperaturen zwischen 25 °C und 120 °C, bevorzugt zwischen 50 und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösemitteln wie sie bereits zuvor beschrieben worden sind gewaschen und anschließend im Inertgasstrom oder am Vakuum getrocknet.

Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösemittelresten oder anderen Verunreinigungen durch entsprechende Reinigungs- und Trocknungsoperationen befreit werden.

Das erfindungsgemäße Katalysatorsystem enthält als cokatalytisch wirkende chemische Verbindung mindestens eine Organoboraluminiumverbindung, die Einheiten der Formel (II) enthält. Bevorzugt sind solche Verbindungen der Formel (II), bei denen $M^3$ für Bor oder Aluminium steht.

Die Einheiten der Formel (II) enthaltende Verbindung kann als Monomer oder als lineares, cyclisches oder käfigartiges Oligomer vorliegen. Es können auch zwei oder mehr chemische Verbindungen, welche Einheiten der Formel (II) enthalten durch Lewis-Säure-Base Wechselwirkungen oder Kondensationsreaktionen untereinander Dimere, Trimere oder höhere Assoziate bilden. Es können auch Mischungen der beschriebenen Verbindungen eingesetzt werden.

Bevorzugte cokatalytisch wirkende Organoboraluminium-Verbindungen gemäß d) entsprechen den Formeln (III) und (IV),

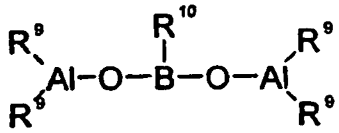

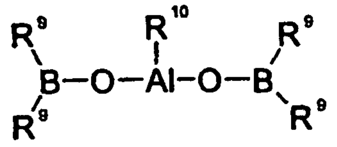

worin $R^9$ und $R^{10}$ die gleiche Bedeutung wie unter Formel (II) haben.

Beispiele für die cokatalytisch wirkenden Verbindungen der Formeln (III) und (IV) sind

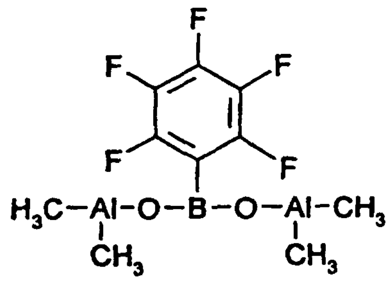

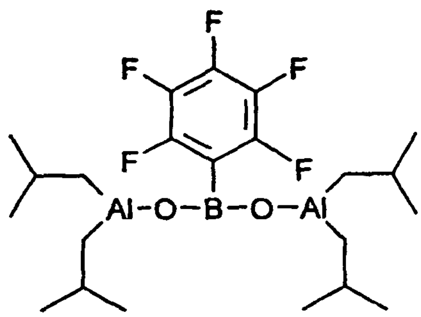

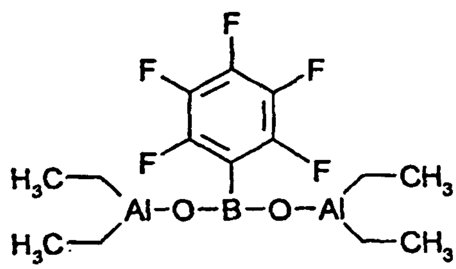

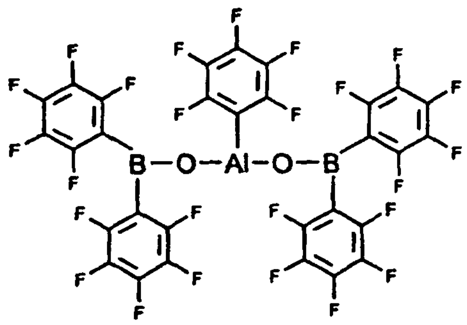

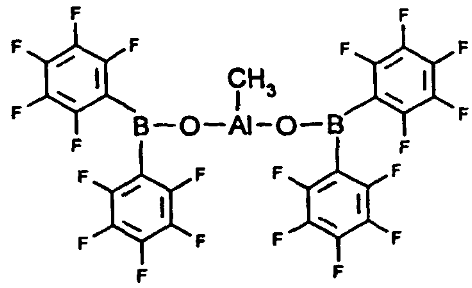

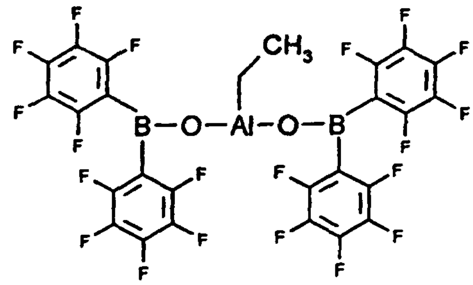

Bei den Organometallverbindungen der Formel (V) handelt es sich vorzugsweise um neutrale Lewissäuren worin $M^5$ für Lithium, Magnesium und/oder Aluminium, insbesondere Aluminium, steht. Beispiele für die bevorzugten OrganometallVerbindungen der Formel (V) sind Trimethylaluminium, Triethylaluminium, Triisopropylaluminium, Trihexylaluminium, Trioctylaluminium, Tri-n-butylaluminium, Tri-n-propylaluminium, Triisoprenaluminium, Dimethylaluminiummonochlorid, Diethylaluminiummonochlorid, Diisobutylaluminiummonochlorid, Methylaluminiumsesquichlorid, Ethylaluminiumsesquichlorid, Dimethylaluminiumhydrid, Diethylaluminiumhydrid, Diisopropylaluminiumhydrid, Dimethylaluminium(trimethylsiloxid), Dimethylaluminium(triethylsiloxid), Phenylalan, Pentafluorphenylalan und o-Tolylalan

Bevorzugt handelt es sich bei dem Metallocen der Formel (A) um die Verbindungen:

Dimethylsilandiylbis(2-methyl-4-(4'-tert.-butyl-phenyl)-indenyl)zirkoniumdichlorid
Dimethylsilandiylbis(2-methyl-4-(4'-tert.-butyl-phenyl)-indenyl)hafnuimdichlorid
Dimethylsilandiylbis(2-methyl-4-(4'-tert.-butyl-phenyl)-indenyl)titandichlorid
Dimethylsilandiylbis(2-methyl-4-(4'-methyl-phenyl)-indenyl)zirkoniumdichlorid
Dimethylsilandiylbis(2-methyl-4-(4'-ethyl-phenyl)-indenyl)zirkoniumdichlorid
Dimethylsitandiylbis(2-methyl-4-(4'-n-propyl-phenyl)-indenyl)zirkoniumdichlorid
Dimethylsilandiylbis(2-methyl-4-(4'-iso-propyl-phenyl)-indenyl)zirkoniumdichlorid
Dimethylsilandiylbis(2-methyl-4-(4'-n-butyl-phenyl)-indenyl)zirkoniurndichlorid
Dimethylsilandiylbis(2-methyl-4-(4'-hexyl-phenyl)-indenyl)zirkoniumdichlorid
Dimethylsilandiylbis(2-methyl-4-(4'-sec-butyl-phenyl)-indenyl)zirkoniumdichlorid
Dimethylsilandiylbis(2-ethyl-4-phenyl)-indenyl)zirkoniumdichlorid
Dimethylsilandiylbis(2-ethyl-4-(4'-methyl-phenyl)-indenyl)zirkoniumdichlorid

Dimethylsilandiylbis(2-ethyl-4-(4'-ethyl-phenyl)-indenyl)zirkoniumdichlorid
Dimethylsilandiylbis(2-ethyl-4-(4'-n-propyl-phenyl)-indenyl)zirkoniumdichlorid
Dimethylsilandiylbis(2-ethyl-4-(4'-iso-propyl-phenyl)-indenyl)zirkoniumdichlorid
Dimethylsilandiylbis(2-ethyl-4-(4'-n-butyl-phenyl)-indenyl)zirkoniumdichlorid
Dimethylsilandiylbis(2-ethyl-4-(4'-hexyl-phenyl)-indenyl)zirkoniumdichlorid
Dimethylsilandiylbis(2-ethyl-4-(4'-pentyl-phenyl)-indenyl)zirkoniumdichlorid
Dimethylsilandiylbis(2-ethyl-4-(4'-cyclohexyl-phenyl)-indenyl)zirkoniumdichlorid
Dimethylsilandiylbis(2-ethyl-4-(4'-sec-butyl-phenyl)-indenyl)zirkoniumdichlorid
Dimethylsilandiylbis(2-ethyl-4-(4'-tert.-butyl-phenyl)-indenyl)zirkoniumdichlorid
Dimethylsilandiylbis(2-n-propyl-4-phenyl)-indenyl)zirkoniumdichlorid
Dimethylsilandiylbis(2-n-propyl-4-(4'-methyl-phenyl)-indenyl)zirkoniumdichlorid
Dimethytsilandiylbis(2-n-propyl-4-(4'-ethyl-phenyl)-indenyl)zirkoniumdichlorid
Dimethylsilandiylbis(2-n-propyl-4-(4'-n-propyl-phenyl)-indenyl)zirkoniumdichlorid
Dimethylsilandiylbis(2-n-propyl-4-(4'-iso-propyl-phenyl)-indenyl)zirkoniumdichlorid
Dimethylsitandiylbis(2-n-propyl-4-(4'-n-butyl-phenyl)-indenyl)zirkoniumdichlorid
Dimethylsilandiylbis(2-n-propyl-4-(4'-hexyl-phenyl)-indenyl)zirkoniumdichlorid
Dimethylsilandiylbis(2-n-propyl-4-(4'-cyclohexyl-phenyl)-indenyl)zirkoniumdichlorid
Dimethylsilandiylbis(2-n-propyl-4-(4'-sec-butyl-phenyl)-indenyl)zirkoniumdichlorid
Dimethylsilandiylbis(2-n-propyl-4-(4'-tert.-butyl-phenyl)-indenyl)zirkoniumdichlorid
Dimethylsilandiylbis(2-n-butyl-4-phenyl)-indenyl)zirkoniumdichtorid
Dimethylsilandiylbis(2-n-butyl-4-(4'-methyl-phenyl)-indenyl)zirkoniumdichlorid
Dimethylsilandiylbis(2-n-butyl-4-(4'-ethyt-phenyl)-indenyl)zirkoniumdichlorid
Dimethylsilandiylbis(2-n-butyl-4-(4'-n-propyl-phenyl)-indenyl)zirkoniumdichlorid
Dimethylsilandiylbis(2-n-butyl-4-(4'-iso-propyl-phenyl)-indenyl)zirkoniumdichlorid
Dimethylsilandlylbis(2-n-butyl-4-(4'-n-butyl-phenyl)-indenyl)zirkoniumdichlorid
Dimethylsilandlylbis(2-n-butyl-4-(4'-hexyl-phenyl)-Indenyl)zirkoniumdichforid
Dimethylsilandiylbis(2-n-butyl-4-(4'-cyclohexyl-phenyl)-indenyl)zirkoniumdichlorid
Dimethylsilandiylbis(2-n-butyl-4-(4'-sec-butyl-phenyl)-indenyl)zirkoniumdichlorid
Dimethylsilandiylbis(2-n-butyl-4-(4'-tert.-butyl-phenyl)-indenyl)zirkoniumdichlorid
Dimethylsilandiylbis(2-hexyl-4-phenyl)-indenyl)zirkoniumdichlorid
Dimethylsilandiylbis(2-hexyl-4-(4'-methyl-phenyl)-indenyl)zirkoniumdichlorid
Dimethylsilandiylbis(2-hexyl-4-(4'-ethyl-phenyl)-indenyl)zirkoniumdichlorid
Dimethylsilandiylbis(2-hexyl-4-(4'-n-propyl-phenyl)-indenyl)zirkoniumdichlorid
Dimethylsilandiylbis(2-hexyl-4-(4' -iso-propyl-phenyl)-indenyl)zirkoniumdichlorid
Dimethylsilandiylbis(2-hexyl-4-(4'-n-butyl-phenyl)-indenyl)zirkoniumdichlorid
Dimethylsilandiylbis(2-hexyl-4-(4'-hexyl-phenyl)-indenyl)zirkoniumdichlorid
Dimethylsilandiyibis(2-hexyl-4-(4'-cyclohexyl-phenyl)-indenyl)zirkoniumdichlorid
Dimethylsilandiylbis(2-hexyl-4-(4'-sec-butyl-phenyl)-indenyl)zirkoniumdichlorid
Dimethylsilandiylbis(2-hexyl-4-(4'-tert.-butyl-phenyl)-indenyl)zirkoniumdichlorid
Dimethylsilandiylbis(2-methyl-4-(4'-tert.-butyl-phenyl)-indenyl)zirkoniumbis(dimethylamid)
Dimethylsilandiylbis(2-ethyl-4-(4'-tert.-butyl-phenyl)-indenyl)zirkoniumdibenzyl
Dimethylsilandiylbis(2-methyl-4-(4'-tert.-butyl-phenyl)-indenyl)zirkoniumdimethyl
Dimethylgermandlylbis(2-ethyl-4-(4'-tert.-butyl-phenyl)-indenyl)zirkoniumdichlorid
Dimethylgermandiylbis(2-ethyl-4-(4'-tert.-butyl-phenyl)-indenyl)hafniumdichlorid
Dimethylgermandlylbis(2-propyl-4-(4'-tert.-butyl-phenyl)-indenyl)titandichlorid
Dimethylgermandiylbis(2-methyl-4-(4'-tert.-butyl-phenyl)-indenyl)zirkoniumdichtorid
Ethylidenbis(2-ethyl-4-phenyl)-indenyl)zirkoniumdichlorid
Ethylidenbis(2-ethyl-4-(4'-tert.-butyl-phenyl)-indenyl)zirkoniumdichlorid
Ethylidenbis(2-n-propyl-4-(4'-tert.-butyl-phenyl)-indenyl)zirkoniumdichlorid
Ethylidenbis(2-n-butyl-4-(4'-tert.-butyl-phenyl)-indenyl)titandichlorid
Ethylidenbis(2-hexy14-(4'-tert.-butyl-phenyl)-indenyl)zirkoniumdibenzyl
Ethiylidenbis(2-ethyl-4-(4'-tert.-butyl-phenyl)-indenyl)hafniumdibenzyl
Ethylidenbis(2-methyl-4-(4'-tert.-butyl-phenyl)-indenyl)titandibenzyl
Ethylidenbis(2-methyl-4-(4' -tert.-butyl-phenyl)-indenyl)zirkoniumdichlorid
Ethylidenbis(2-ethyl-4-(4'-tert.-butyl-phenyl)-indenyl)hafniumdimethyl
Ethylidenbis(2-n-propyl-4-phenyl)-indenyl)titandimethyl
Ethylidenbis(2-ethyl-4-(4'-tert.-butyl-phenyl)-indenyl)zirkoniumbis(dimethylamid)
Ethylidenbis(2-ethyh-4-(4'-tert.-butyl-phenyl)-indenyl)hafniumbis(dimethylamid)

Ethylidenbis(2-ethyl-4-(4'-tert: butyl-phenyl)-indenyl)titanbis(dimethylamid)
Methylethylidenbis(2-ethyl-4-(4'-tert.-butyl-phenyl)-indenyl)zirkoniumdichlorid
Methylethylidenbis(2-ethyl-4-(4'-tert.-butyl-phenyl)-indenyl)hafniumdichlorid
Phenylphosphandiyl(2-ethyl-4-(4'-tert.-butyl-phenyl)-indenyl)zirkoniumdichlorid
Phenylphosphandiyl(2-methyl-4-(4'-tert.-butyl-phenyl)-indenyl) zirkoniumdichlorid
Phenylphosphandiyl(2-ethyl-4-(4'-tert.-butyt-phenyl)-indenyl) zirkoniumdichlorid

Des weiteren sind die Metallocene, bei denen das Zirkoniumfragment "-zirkoniumdichlorid" die Bedeutungen

Zirkonium-monochloro-mono-(2,4-di-tert.-butyl-phenolat)
Zirkonium-monochloro-mono-(2,6-di-tert.-butyl-phenolat)
Zirkonium-monochloro-mono-(3,5-di-tert.-butyl-phenolat)
Zirkonium-monochloro-mono-(2,6-di-sec.-butyl-phenolat)
Zirkonium-monochloro-mono-(2,4-di-methylphenolat)
Zirkonium-monochloro-mono-(2,3-di-methylphenolat)
Zirkonium-monochloro-mono-(2,5-di-methylphenolat)
Zirkonium-monochloro-mono-(2,6-di-methylphenolat)
Zirkonium-monochloro-mono-(3,4-di-methylphenolat)
Zirkonium-monochloro-mono-(3,5-di-methylphenolat)
Zirkonium-monochloro-monophenolat
Zirkonium-monochloro-mono-(2-methylphenolat)
Zirkonium-monochloro-mono-(3-methylphenolat)
Zirkonium-monochtoro-mono-(4-methylphenolat)
Zirkonium-monochloro-mono-(2-ethylphenolat)
Zirkonium-monochloro-mono-(3-ethylphenolat)
Zirkonium-monochloro-mono-(4-ethylphenolat)
Zirkonium-monochloro-mono-(2-sec.-butylphenolat)
Zrkonium-monochloro-mono-(2-tert.-butylphenolat)
Zirkonium-monochloro-mono-(3-tert.-butylphenolat)
Zirkonium-monochloro-mono-(4-sec.-butylphenolat)
Zirkonium-monochloro-mono-(4-tert.-butylphenolat)
Zirkonium-monochloro-mono-(2-isopropyl-5-methylphenolat)
Zirkonium-monochloro-mono-(4-isopropyl-3-methylphenolat)
Zirkonium-monochloro-mono-(5-isopropyl-2-methylphenolat)
Zirkonium-monochloro-mono-(5-isopropyl-3-methylphenolat)
Zirkonium-monochloro-mono-(2,4-bis-(2-methyl-2-butyl)-phenolat)
Zirkonium-monochloro-mono-(2,6-di-tert.-butyl-4-methyl-phenolat)
Zirkonium-monochloro-mono-(4-nonylphenolat)
Zirkonium-monochloro-mono-(1-naphtholat)
Zirkonium-monochtoro-mono-(2-naphtholat)
Zirkonium-monochloro-mono-(2-phenylphenolat)
Zirkonium-monochloro-mono-(tert. butoxid)
Zirkonium-monochloro-mono-(N-methylanilid)
Zirkonium-monochloro-mono-(2-tert.-butylanilid)
Zirkonium-monochloro-mono-(tert.-butylamid)
Zirkonium-monochloro-mono-(di-iso.-propylamid)
Zirkonium-monochloro-mono-methyl
Zirkonium-monöchloro-mono-benzyl
Zirkonium-monochloro-mono-neopentyl, hat, Beispiele für die erfindungsgemäßen Metallocene.

Weiterhin bevorzugt sind die entsprechenden Zirkondimethyl-Verbindungen und die entsprechenden Zirkon-$\eta^4$-Butadien-Verbindungen, sowie die entsprechenden Verbindungen mit 1,2-(1-methyl-ethandiyl)-, 1,2-(1,1-dimethyl-ethandiyl)- und 1,2(1,2-dimethyl-ethandiyl)-Brücke.

Das Verhältnis von rac-Isomer zu meso-Isomer der Metallocenkomponente der Formel (A) liegt im erfindungsgemäßen Katalysatorsystem zwischen 1:10 und 2:1, bevorzugt zwischen 1:2 und 3:2.

Die Herstellungsverfahren für Metallocene der Formel (A) sind z.B. in Journal of Organometallic Chem. 288 (1985) 63 - 67 und in den dort zitierten Dokumenten eingehend beschrieben.

Das erfindungsgemäße Katalysatorsystem ist erhältlich durch Umsetzung einer Lewis-Base der Formel (I) und

einer Organoboraluminium-Verbindung, die aus Einheiten der Formel (II) aufgebaut ist, mit einem Träger. Anschließend erfolgt die Umsetzung mit einer Lösung oder Suspension aus einem oder mehreren Metallocenverbindungen der Formel (VI) und optional einer oder mehrerer Organometallverbindungen der Formel (V).

Die Aktivierung des Katalysatorsystems kann dadurch wahlweise vor dem Einschleusen in den Reaktor vorgenommen werden oder aber erst im Reaktor durchgeführt werden. Femer wird ein Verfahren zur Herstellung von Polyolefinen beschrieben. Die Zugabe einer weiteren chemischen Verbindung, die als Additiv vor der Polymerisation zudosiert wird, kann zusätzlich von Vorteil sein.

Zur Herstellung des erfindungsgemäßen Katalysatorsystems wird das Trägermeterial in einem organischen Lösemittel suspendiert. Geeignete Lösemittel sind aromatische oder aliphatische Lösemittel, wie beispielsweise Hexan, Heptan, Toluol oder Xylol oder halogenierte Kohlenwasserstoffe, wie Methylenchlorid oder halogenierte aromatische Kohlenwasserstoffe wie o-Dichlorbenzol. Der Träger kann zuvor mit einer Verbindung der Formel (V) vorbehandelt werden. Anschließend wird eine oder mehrere Verbindungen der Formel (I) zu dieser Suspension gegeben, wobei die Reaktionszeit zwischen 1 Minute und 48 Stunden liegen kann, bevorzugt ist eine Reaktionszeit zwischen 10 Minuten und 2 Stunden. Die Reaktionslösung kann isoliert und anschließend resuspendiert werden oder aber auch direkt mit einer cokatalytisch wirkenden Organoboraluminimverbindung, die aus Einheiten gemäß der Formel (II) aufgebaut ist, umgesetzt werden. Die Reaktionszeit liegt dabei zwischen 1 Minute und 48 Stunden, wobei eine Reaktionszeit von zwischen 10 Minuten und 2 Stunden bevorzugt ist. Bevorzugt ist die Menge von 1 bis 4 Äquivalenten einer Lewis-Base der Formel (I) mit einem Äquivalent einer cokatalytisch wirksamen Verbindung die gemäß der Formel (II) aufgebaut ist. Besonders bevorzugt ist die Menge von einem Äquivalent einer Lewis-Base der Formel (1) mit einem Äquivalent einer cokatalytisch wirksamen Verbindung die gemäß der Formel (11) aufgebaut ist. Das Reaktionsprodukt dieser Umsetzung ist eine metalloceniumbildende Verbindung, die kovalent an das Trägermaterial fixiert ist. Es wird nachfolgend als modifiziertes Trägermaterial bezeichnet. Die Reaktionslösung wird anschließend filtriert und mit einem der oben genannten Lösemittel gewaschen. Danach wird das modifizierte Trägermaterial im Hochvakuum getrocknet. Das modifizierte Trägermaterial kann nach dem Trocknen wieder resuspendiert werden und mit einer Verbindung der Formel (V) nachbehandelt werden. Die Verbindung der Formel (V) kann aber auch vor der Filtration und Trocknung des modifizierten Trägermaterials zugegeben werden.

Das Aufbringen einer oder mehrerer Metallocenverbindungen vorzugsweise der Formel (A) und einer oder mehrerer Organometallverbindungen der Formel (V) auf das modifizierte Trägermaterial geht vorzugsweise so vonstatten, daß eine oder mehrere Metallocenverbindungen der Formel (A) in einem oben beschriebenen Lösemittel gelöst bzw. suspendiert wird und anschließend eine oder mehrere Verbindungen der Formel (V), die vorzugsweise ebenfalls gelöst bzw. suspendiert ist, umgesetzt werden. Das stöchiometrische Verhältnis an Metallocenverbindung der Formel (A) und einer Organometallverbindung der (V) beträgt 100 : 1 bis $10^{-4}$ : 1. Vorzugsweise beträgt das Verhältnis 1 : 1 bis $10^{-2}$ : 1. Das modifizierte Trägermaterial kann entweder direkt im Polymerisationsreaktor oder in einem Reaktionskolben in einem oben genannten Lösemittel vorgelegt werden. Anschließend erfolgt die Zugabe der Mischung aus einer Metallocenverbindung der Formel (A) und einer Organometallverbindung der Formel (V). Optional kann aber auch eine oder mehrere Metallocenverbindungen der Formel (A) ohne vorherige Zugabe einer Organometallverbindung der Formel (V) zu dem modifizieten Trägermaterial gegeben werden.

Die Menge an modifizierten Träger zu einer Metallocenverbindung der Formel (A) beträgt vorzugsweise 10g : 1 μmol bis $10^{-2}$g : 1 μmol. Das stöchiometrische Verhältnis an Metallocenverbindung der Formel (A) zu der geträgerten cokatalytisch wirkenden Organoboraluminiumverbindung, bestehend aus Einheiten der Formel (II), beträgt 100 : 1 bis $10^{-4}$ : 1, vorzugsweise 1 : 1 bis $10^{-2}$ : 1.

Das geträgerte Katalysatorsystem kann direkt zur Polymerisation eingesetzt werden. Es kann aber auch nach Entfernen des Lösemittels resuspendiert zur Polymerisation eingesetzt werden. Der Vorteil dieser Aktivierungsmethode liegt darin, daß es die Option bietet das polymerisationsaktive Katalysatorsystem erst im Reaktor entstehen zu lassen. Dadurch wird verhindert, daß beim Einschleusen des luftempfindlichen Katalysators zum Teil Zersetzung eintritt.

Das erfindungsgemäß dargestellte geträgerte Katalysatorsystem kann entweder direkt zur Polymerisation von Propylen eingesetzt oder vor seiner Verwendung in einem Polymerisationsprozeß mit einem oder mehreren olefinischen Monomeren vorpolymerisiert werden. Die Ausführung der Vorpolymerisation von geträgerten Katalysatorsystemen ist beispielsweise in WO 94/28034 beschrieben.

Die vorliegende Erfindung betrifft auch ein Verfahren zur Herstellung von Polypropylen durch Polymerisation von Propylen in Gegenwart des erfindungsgemäßen Katalysatorsystems, enthaltend mindestens eine Übergangsmetallkomponente der Formel (A). Unter dem Begriff Polymerisaton wird eine Homopolymerisation wie auch eine Copolymerisation verstanden, insbesondere jedoch eine Homopoylmerisation von Propylen.

Die Polymerisation wird bei einer Temperatur von - 60 bis 300 °C , bevorzugt 50 bis 200 °C, ganz besonders bevorzugt 50 - 80 °C durchgeführt. Der Druck beträgt 0,5 bis 2000 bar, bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden.

Das erfindungsgemäß dargestellte Katalysatorsystem kann als einzige Katalysatorkomponente für die Polymerisation von Propylen eingesetzt werden, oder bevorzugt in Kombination mit mindestens einer Alkylverbindung der Elemente aus der I. bis III. Hauptgruppe des Periodensystems, wie z.B. einem Aluminium-, Magnesium- oder Lithiumalkyl oder einem Aluminoxan eingesetzt werden. Die Alkylverbindung wird dem Monomeren oder Suspensionsmittel zugesetzt und dient zur Reinigung des Monomeren von Substanzen, die die Katalysatoraktivität beeinträchtigen können. Die Menge der zugesetzten Alkylverbindung hängt von der Qualität der eingesetzten Monomere ab.

Als Molmassenregler und/oder zur Steigerung der Aktivität wird vorzugsweise Wasserstoff zugegeben.

Außerdem kann als Antistatikum eine Mischung aus einem Metallsalz der Medialansäure, einem Metallsalz der Anthranilsäure und einem Polyamin eingesetzt werden, wie in EP-A-0,636,636 beschrieben.

Kommerziell erhältliche Produkte wie Stadis® 450 der Fa. DuPont, eine Mischung aus Toluol, Isopropanol, Dodecylbenzolsulfonsäure, einem Polyamin, einem Copolymer aus Dec-1-en und $SO_2$ sowie Dec-1-en oder ASA®-3 der Fa. Shell und ARU5R® 163 der Firma ICI können ebenfalls verwendet werden.

Vorzugsweise wird das Antistatikum als Lösung eingesetzt, im bevorzugten Fall von Stadis® 450 werden bevorzugt 1 bis 50 Gew.-% dieser Lösung, vorzugsweise 5 bis 25 Gew.-%, bezogen auf die Masse des eingesetzten Trägerkatalysators (Träger mit kovalent fixierter metalloceniumbildende Verbindung und eine oder mehrere Metallocenverbindungen z.B. der Formel A) eingesetzt. Die benötigten Mengen an Antistatikum können jedoch, je nach Art des eingesetzten Antistatikums, in weiten Bereichen schwanken.

Die eigentliche Polymerisation wird vorzugsweise in flüssigen Monomer (bulk) oder in der Gasphase durchgeführt.

Das Antistatikum kann zu jedem beliebigen Zeitpunkt zur Polymerisation zudosiert werden. Zum Beispiel ist eine bevorzugte Verfahrensweise die, daß das geträgerte Katalysatorsystem in einem organischen Lösemittel, bevorzugt Alkane wie Heptan oder Isododekan, resuspendiert wird. Anschließend wird es unter Rühren in den Polymerisationsautoklav zugegeben. Danach wird das Antistatikum zudosiert. Die Polymerisation wird bei Temperaturen im Bereich von 0 bis 100°C durchgeführt. Eine weitere bevorzugte Verfahrensweise ist, daß das Antistatikum vor Zugabe des geträgerten katalysatorsystems in den Polymerisationsautoklav zudosiert wird. Anschließend wird das resuspendierte geträgerte Katalysatorsystem unter Rühren bei Temperaturen im Bereich von 0 bis 100°C zudosiert. Die Polymerisationszeit kann im Bereich von 0,1 bis 24 Stunden. Bevorzugt ist eine Polymerisationszeit im Bereich von 0,1 bis 5 Stunden.

Die mit dem erfindungsgemäßen Katalysatorsystem dargestellten Polypropylene zeigen eine gleichmäßige Kommorphologie und weisen keine Feinkomanteile auf. Bei der Polymerisation mit dem erfindungsgemäßen Katalysatorsyatem treten keine Beläge oder Verbackungen auf.

Mit dem erfindungsgemäßen Katalysatorsystem werden Polypropylene mit außerordentlich hoher Stereo- und Regiospezifität erhalten.

Besonders charakteristisch für die Stereo- und Regiospezifität von Polypropylen ist die Triaden-Taktizität (TT) und der Anteil an 2-1-insertierten Propeneinheiten (RI), die sich aus den $^{13}C$-NMR-Spektren ermitteln lassen.
Die $^{13}C$-NMR- Spektren werden in einem Gemisch aus Hexachlorbutadien und Tetrachlorethan-$d_2$ bei erhöhter Temperatur (365 K) gemessen. Alle $^{13}C$-NMR-Spektren der gemessenen Polypropylen-Proben werden auf das Resonanzsignal von Tetrachlorethan-$d_2$ ($\delta$ = 73.81 ppm) geeicht.

Zur Bestimmung der Triaden-Taktizität des Polypropylens werden die Methyl-Resonanzsignale im $^{13}C$-NMR-Spektrum zwischen 23 und 16 ppm betrachtet; vgl. J. C. Randall, Polymer Sequence Determination: Carbon-13 NMR Method, Academic Press New York 1978; A. Zambelli, P. Locatelli, G. Bajo, F. A. Bovey, Macromolucules 8 (1975), 687-689; H. N. Cheng, J. A. Ewen, Makromol. Chem. 190 (1989), 1931-1943. Drei aufeinander folgende 1-2-insertierte Propeneinheiten, deren Methylgruppen in der "Fischer-Projektion" auf der gleichen Seite angeordnet sind, bezeichnet man als mm - Triade ($\delta$ = 21.0 ppm bis 22.0 ppm). Zeigt nur die zweite Methylgruppe der drei aufeinander folgenden Propeneinheiten zur anderen Seite, spricht man von einer rr-Triade ($\delta$ = 19.5 ppm bis 20.3 ppm) und zeigt nur die dritte Methylgruppe der drei aufeinander folgenden Propeneinheiten zur anderen Seite, von einer mr-Triade ($\delta$ = 20.3 ppm bis 21.0 ppm). Die Triaden-Taktizität berechnet man nach folgender Formel: $TT(\%) = mm / (mm + mr + rr) \cdot 100$

Wird eine Propeneinheit invers in die wachsende Polymerkette insertiert, spricht man von einer 2-1-Insertion; vgl. T. Tsutsui, N. Ishimaru, A. Mizuno, A. Toyota, N. Kashiwa, Polymer 30, (1989), 1350-56. Folgende verschiedene strukturelle Anordnungen sind möglich:

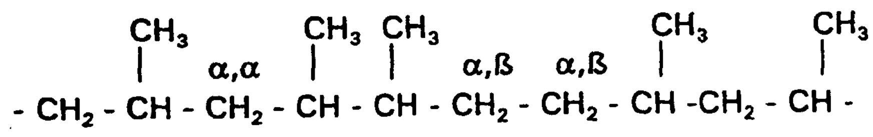

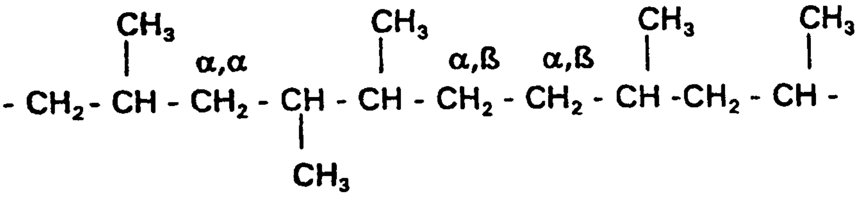

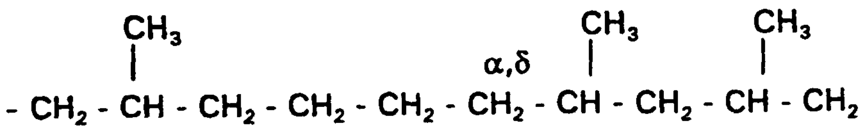

Der Anteil an 2-1-insertierten Propeneinheiten (RI) kann nach folgender Formel berechnet werden:

$$RI\ (\%) = 0.5\ Ia{,}ß\ (Ia{,}a + Ia{,}ß + Ia{,}d) \cdot 100,$$

wobei

Ia,a die Summe der Intensitäten der Resonanzsignale bei δ = 41.84, 42.92 und 46.22 ppm,

Ia,β die Summe der Intensitäten der Resonanzsignale bei δ = 30.13, 32.12, 35.11 und 35.57 ppm sowie

Ia,d die Intensität des Resonanzsignals bei δ = 37.08 ppm bedeuten.

Das isotaktische Polypropylen, das mit dem erfindungsgemäßen Katalysatorsystem hergestellt worden ist, zeichnet sich durch einen Anteil an 2-1-insertierten Propeneinheiten RI < 0.5% bei einer Triaden-Taktizität TT > 98.0% und einen Schmelzpunkt > 153°C aus, wobei $M_w/M_n$ des erfindungsgemäßen Polypropylens zwischen 2.5 und 3.5 liegt Die mit dem erfindungsgemäßen Katalysatorsystem herstellbaren Propylen-Copolymere zeichnen sich durch eine gegenüber dem Stand der Technik deutlich höhere Molmasse aus. Gleichzeitig sind solche Copolymere durch Einsatz des erfindungsgemäßen Katalysatorsystems mit hoher Produktivität bei technisch relevanten Prozessparametem ohne Belagsbildung herstellbar.

Das nach dem erfindungsgemäßen Verfahren hergestellten Polypropylen ist insbesondere zur Herstellung reißfester, harter und steifer Formkörper wie Fasern, Filamente, Spritzgußteile, Folien, Platten oder Großhohlkörpern (z.B. Rohre) geeignet.

Die nachfolgenden Beispiel dienen zur näheren Erläuterung der Erfindung haben jedoch keinen limitierenden Charakter.

Allgemeine Angaben: Herstellung und Handhabung der Verbindungen erfolgten unter Ausschluß von Luft und Feuchtigkeit unter Argonschutz (Schlenk-Technik). Alle benötigten Lösemittel wurden vor Gebrauch durch mehrstündiges Sieden über geeignete Trockenmittel und anschließend Destillation unter Argon absolutiert.

Beispiel 1: Synthese von Bis(pentafluorphenylboroxy)methylalan

5ml Trimethylaluminium (2M in Toluol, 10 mmol) werden in 45 ml Toluol vorgelegt. Bei -40°C werden zu dieser Lösung 6.92g Pentafluorboronsäure (20mmol) in 50ml Toluol über 15 Minuten zugetropft. Es wird 1 Stunde bei -40°C gerührt und anschließend eine weitere Stunde bei Raumtemperatur. Die trübe Lösung wird über eine G4-Fritte filtriert. Es resultiert eine klare, farblose Lösung (0.1M bezogen auf Al) von Bis(phenylboroxy)methylalan in Toluol.

Beispiel 2: Trägerung von Bis(pentafluorphenylboroxy)methylalan

2g SiO2 (PQ MS3030, vorbehandelt bei 140°C, 10mbar, 10 Std.) werden in 30 ml Toluol suspendiert und bei Raumtemperatur 0,5 ml N,N-Dimethylanilin zugegeben. Es wird auf 0°C gekühlt und über einen Tropfrichter 40ml der im Beispiel 1 hergestellten Lösung zugetropft. Man-läßt auf Raumtemperatur erwärmen und rührt 3 Stunden nach. Die

Suspension wird anschließend filtriert und mit Pentan gewaschen. Danach wird der Rückstand im Ölpumpemvakuum bis zur Gewichtskonstanz getrocknet. Es resultieren 4,01g eines hellila gefärbten Trägermaterials.

Beispiel 3: Herstellung des Katalysatorsystems 1

Zu 3.9 mg Dimethylsilandiylbis(2-n-propyl-4-(4'-tert.butyl-phenyl)-indenyl)zirkoniumdichlorid (rac/meso-Verhältnis 1:1,5 μmol) in 3 ml Toluol werden 0,013 ml Trimethylaluminium (2M in Toluol, 25 μmol) gegeben und 6 Stunden gerührt. Anschließend werden bei Raumtemperatur 0,24 g des im Beispiel 2 hergestellten Trägers zugegeben. Die Katalysatorlösung wird 1 Stunde gerührt und danach das Lösemittel im Ölpumpenvakuum abgezogen. Es resultiert ein rosa farbendes, freifließendes Pulver.

Beispiel 4: Polymerisation mit dem Katalysatorsystem 1

Ein trockener 21-Reaktor wird zunächst mit Stickstoff und anschließend mit Propylen gespült und mit 1,5 l flüssigem Propylen befüllt. Dazu werden 3 ml TIBA (20% ig in Varsol) zugegeben und 15 Minuten gerührt. Anschließend wird das im Beispiel 3 hergestellte Katalysatorsystem 1 in 20 ml Heptan resuspendiert eingespritzt und mit 15 ml Heptan nachgespült. Das Reaktionsgemisch wird auf die Polymerisationstemperatur von 60°C aufgeheizt und eine Stunde polymerisiert. Gestoppt wird die Polymerisation durch Abgasen des restliche Propylens. Das Polymer wird im Vakuumtrockenschrank getrocknet. Es resultieren 630g Polypropylen-Pulver. Der Reaktor zeigte keine Beläge an der Innenwand oder Rührer. Die Katalysatoraktivität beträgt 161 kg PP/g Metallocen x h.

Beispiel 5: Herstellung des Katalysatorsystems 2

Zu 3.9 mg Dimethylsilandiylbis(2-ethyl-4-(4'-tert.butyl-phenyl)-indenyl)zirkoniumdichlorid (rac/meso 1:1; 5 μmol) in 3 ml Toluol werden 0,013 ml Trimethylaluminium (2M in Toluol, 25 μmol) gegeben und 4 Stunden gerührt. Anschließend werden bei Raumtemperatur 0,24 g des im Beispiel 2 hergestellten Trägers zugegeben. Die Katalysatorlösung wird 1 Stunde gerührt und danach das Lösemittel im Ölpumpenvakuum abgezogen. Es resultiert ein rosa farbendes, freifließendes Pulver.

Beispiel 6: Polymerisation mit dem Katalysatorsystem 2

Ein trockener 21-Reaktor wird zunächst mit Stickstoff und anschließend mit Propylen gespült und mit 1,5 l flüssigem Propylen befüllt. Dazu werden 3 ml TIBA (20% ig in Varsol) zugegeben und 15 Minuten gerührt. Anschließend wird das im Beispiel 5 hergestellte Katalysatorsystem 2 in 20 ml Heptan resuspendiert eingespritzt und mit 15 ml Heptan nachgespült. Das Reaktionsgemisch wird auf die Polymerisationstemperatur von 60°C aufgeheizt und eine Stunde polymerisiert. Gestoppt wird die Polymerisation durch Abgasen des restliche Propylens. Das Polymer wird im Vakuumtrockenschrank getrocknet. Es resultieren 595 g Polypropylen-Pulver. Der Reaktor zeigte keine Beläge an der Innenwand oder Rührer. Die Katalysatoraktivität beträgt 153 kg PP/g Metallocen x h.

Beispiel 7: Herstellung des Katalysatorsystems 3

Zu 3,1 mg Dimethylsilandiylbis(2-methyl-4-phenyl-indenyl)-zirkoniumdichlorid (100% rac; 5 μmol) in 3 ml Toluol werden 0,02 ml Trimethylaluminium (2M in Toluol, 40 μmol) gegeben und 1 Stunde gerührt. Anschließend werden bei Raumtemperatur 0,48 g des im Beispiel 2 hergestellten Trägers zugegeben. Die Katalysatorlösung wird 1 Stunde gerührt und danach das Lösemittel im Ölpumpenvakuum abgezogen. Es resultiert ein rosa farbendes, freifließendes Pulver.

Beispiel 8: Vergleichspolymerisation mit dem Katalysatorsystem 3

Ein trockener 21-Reaktor wird zunächst mit Stickstoff und anschließend mit Propylen gespült und mit 1,5 l flüssigem Propylen befüllt. Dazu werden 3 ml TIBA (20% ig in Varsol) zugegeben und 15 Minuten gerührt. Anschließend wird das im Beispiel 7 hergestellte Katalysatorsystem 3 in 20 ml Heptan resuspendiert eingespritzt und mit 15 ml Heptan nachgespült. Das Reaktionsgemisch wird auf die Polymerisationstemperatur von 60°C aufgeheizt und eine Stunde polymerisiert. Gestoppt wird die Polymerisation durch Abgasen des restliche Propylens. Das Polymer wird im Vakuumtrockenschrank getrocknet. Es resultieren 320 g Polypropylen-Pulver. Der Reaktor zeigte keine Beläge an der Innenwand oder Rührer. Die Katalysatoraktivität beträgt 103 kg PP/g Metallocen x h.

Beispiel 9:

Polymerisation mit dem Katalysatorsystem 2 in Gegenwart von Wasserstoff

Ein trockener 2l-Reaktor wird zunächst mit Stickstoff und anschließend mit Propylen gespült. Anschließend werden 0,3 bar Wasserstoff auf den Reaktor gegeben. Der Reaktor wird dann mit 1,5 l flüssigem Propylen befüllt. Dazu werden 3 ml TIBA (20% ig in Varsol) zugegeben und 15 Minuten gerührt. Anschließend wird die Hälfte des nach Beispiel 5 hergestellten Katalysatorsystem 2 [= 1,95 mg Dimethylsilandiyl-bis-(2-ethyl-4-(4'-tert. Butyl-phenyl)-indenyl)zirkoniumchlorid (rac/meso 1:1; 2,5 μmol) in 20 ml Heptan resuspendiert eingespritzt und mit 15 ml Heptan nachgespült. Das Reaktionsgemisch wird auf die Polymerisationstemperatur von 60°C aufgeheizt und eine Stunde polymerisiert. Gestoppt wird die Polymerisation durch Abgasen des restliche Propylens. Das Polymer wird im Vakuumtrockenschrank getrocknet. Es resultieren 620 g Polypropylen-Pulver. Der Reaktor zeigte keine Beläge an der Innenwand oder Rührer. Die Katalysatoraktivität beträgt 318 kg PP/g Metallocen x h.

Die Polymerisationsergebnisse aus den Beispielen sind in Tabelle I zusammengestellt.

Tabelle I:

| Beispiel | rac/meso | Gehalt rac-Form | Ausbeute [kg PP] | Aktivität [kg PP/g Met/h] | Smp. [°C] |
|---|---|---|---|---|---|
| 4 | 1 : 1 | 50% | 0.630 | 161 | 157 |
| 6 | 1 : 1 | 50% | 0.595 | 153 | 154 |
| 8 | rac | 100% | 0.640 | 103 | 150 |
| 9 | 1 : 1 | 50% | 0.620 | 318 | 157 |

**Patentansprüche**

**1.** Katalysatorsystem enthaltend

a) mindestens ein substituiertes Metallocen der Formel A

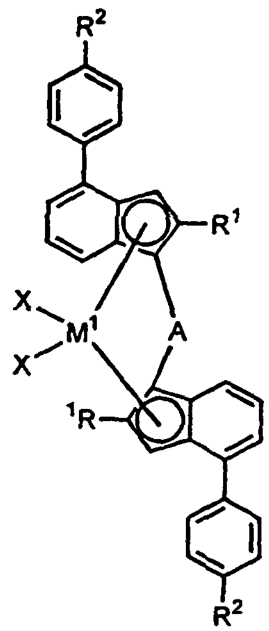

(A)

worin

$R^1$ und $R^2$ gleich oder verschieden sind und ein Wasserstoffatom oder eine $C_1$-$C_{20}$-Kohlenwasserstoff-

gruppe, mit der Einschränkung, daß $R^1$ nicht Methyl ist, wenn $R^2$ gleich Wasserstoff ist,
$M^1$ ein Übergangsmetall der Gruppe 4, 5 oder 6 des Periodensystems der Elemente ist,
A eine Verbrückung der Formel

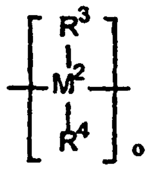 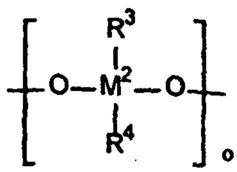 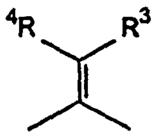

oder $=BR^3$, $AlR^3$, -S-, -SO-, $-SO_2-$, $=NR^3$, $=PR^3$, $=P(O)R^3$, o-Phenylen, 2,2'-Biphenylen ist,
worin
$M^2$ Kohlenstoff, Silizium, Germanium, Zinn, Stickstoff oder Phosphor ist,
o gleich 1, 2, 3 oder 4 ist,
$R^3$ und $R^4$ unabhängig voneinander gleich oder verschieden ein Wasserstoffatom, Halogen, eine $C_1$-$C_{20}$-kohlenstoffhaltige Gruppe bedeuten und $R^3$ und $R^4$ gemeinsam ein mono- oder polycyclisches Ringsystem bilden können, und
X gleich oder verschieden für ein Wasserstoffatom, ein Halogenatom, eine Hydroxylgruppe, eine $C_1$-$C_{10}$-Alkylgruppe, eine $C_6$-$C_{15}$-Arylgruppe, eine $C_1$-$C_{10}$-Alkoxygruppe, eine $C_6$-$C_{15}$-Aryloxygruppe, eine Benzylgruppe, eine $NR^5_2$-Gruppe, wobei $R^5$ gleich oder verschieden eine $C_1$-$C_{10}$-Alkylgruppe, eine $C_6$-$C_{15}$-Arylgruppe, eine $(CH_3)_3Si$-Gruppe steht,
wobei das Verhältnis von rac-Isomer zu meso-Isomer des Metallocens der Formel (I) im erfindungsgemäßen Katalysatorsystem zwischen 1:10 und 2:1 liegt,

b) mindestens eine Lewis-Base der Formel I,

$$M^3R^6R^7R^8 \qquad (I)$$

worin
$R^6$, $R^7$ und $R^8$ gleich oder verschieden sind und für ein Wasserstoffatom, eine $C_1$-$C_{20}$-Alkyl-, $C_1$-$C_{20}$-Halogenalkyl-, $C_6$-$C_{40}$-Aryl-, $C_6$-$C_{40}$-Halogenaryl-, $C_7$-$C_{40}$-Alkylaryl- oder $C_7$-$C_{40}$-Arylalkyl-Gruppe stehen, wobei gegebenenfalls zwei Reste oder alle drei Reste $R^6$, $R^7$ und $R^8$ über $C_2$-$C_{20}$-Kohlenstoffeinheiten miteinander verbunden sein können und
$M^3$ für ein ein Element der V. Hauptgruppe des Periodensystems der Elemente steht,
c) einen Träger,
d) mindestens eine Organoboraluminium-Verbindung, die aus Einheiten der Formel II

$$R_i^9M^4\text{-}O\text{-}M^4R_j^{10} \qquad (II)$$

worin

$R^9$ und $R^{10}$ gleich oder verschieden sind und ein Wasserstoffatom, ein Halogenatom, eine $C_1$-$C_{40}$-kohlenstoffhaltige Gruppe oder $R^9$ eine $-OSiR_3$-Gruppe sein kann, worin R gleich oder verschieden sind und die gleiche Bedeutung wie $R^9$ haben,
$M^4$ gleich oder verschieden ist und für ein Element der 3. Hauptgruppe des Periodensystems der Elemente steht und
i und j jeweis eine ganze Zahl 0, 1 oder 2 steht,

aufgebaut ist und die kovalent an den Träger gebunden ist,
sowie gegebenenfalls
e) eine Organometallverbindung der Formel V

$$[M^5R^{11}{}_p]_k \qquad (V)$$

worin

$M^5$ ein Element der I., II. und III. Hauptgruppe des Periodensystems der Elemente ist,
$R^{11}$ gleich oder verschieden ist und ein Wasserstoffatom, ein Halogenatom oder eine $C_1$-$C_{40}$-kohlenstoffhaltige Gruppe bedeutet,
p eine ganze Zahl von 1 bis 3 und
k ist eine ganze Zahl von 1 bis 4 ist.

2. Katalysatorsystem nach Anspruch 1, **dadurch gekennzeichnet, daß** die Verbindung der Formel (A)

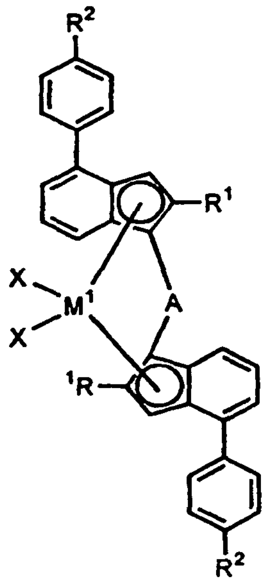

(A)

worin

$R^1$ und $R^2$ gleich oder verschieden sind und ein Wasserstoffatom, eine $C_1$-$C_{20}$-Alkylgruppe, eine $C_6$-$C_{14}$-Arylgruppe, eine $C_2$-$C_{20}$-Alkenylgruppe, mit der Einschränkung, daß $R^1$ nicht Methyl ist, wenn $R^2$ gleich Wasserstoff ist,
$M^1$ ein Übergangsmetall wie Titan, Zirkonium, Hafnium, Vanadium, Niob, Tantal, Chrom, Molybdän oder Wolfram, ist,
A für Dimethylsilandiyl, Dimethylgermandiyl, Ethyliden, Methylethyliden, 1,1-Dimethylethyliden, 1,2-Dimethylethyliden, Tetramethylethyliden, Isopropyliden, Phenylmethylmethyliden oder Diphenylmethyliden, steht,
X gleich oder verschieden für ein Wasserstoffatom, Fluor, Chlor, Brom oder Iod, eine Hydroxylgruppe, Methyl, Ethyl, Propyl, iso-Propyl, n-Butyl, iso-Butyl, sec-Butyl, tert.-Butyl, Hexyl, Cyclohexyl, Phenyl, Naphthyl, Methoxy, Ethoxy, tert.-Butoxy, eine $NR^5_2$-Gruppe, wobei $R^5$ gleich oder verschieden Methyl und/oder Ethyl, ein Chloratom, ein Fluoratom, steht,

wobei das Verhältnis von rac-Isomer zu meso-Isomer des Metallocens der Formel (A) im erfindungsgemäßen Katalysatorsystem zwischen 1:2 und 3:2 liegt.

3. Katalysatorsystem nach Anspruch 1 oder 2, **dadurch gekennzeichnet, daß** die Verbindung der Formel (A)

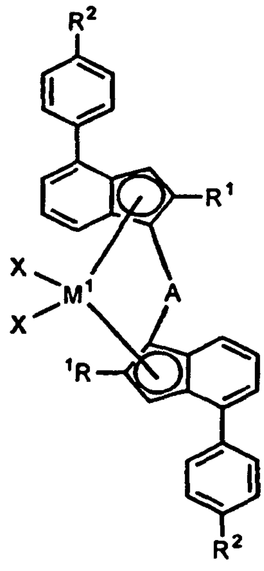

(A)

worin

$R^1$ und $R^2$ gleich oder verschieden sind und Wasserstoff Methyl, Ethyl, n-Propyl, iso-Propyl, n-Butyl, sec-Butyl, iso-Butyl, tert.-Butyl, Pentyl und Hexyl bedeuten, mit der Einschränkung, daß $R^1$ nicht Methyl ist, wenn $R^2$ gleich Wasserstoff ist,
$M^1$ für Zirkonium, steht,
A für Dimethylsilandiyl, Dimethylgermandiyl oder Ethyliden, steht,
X gleich oder verschieden für Wasserstoff, Fluor, Chlor, Brom, eine Hydroxylgruppe, Methyl, Ethyl, Propyl, iso-Propyl, n-Butyl, iso-Butyl, sec-Butyl, tert.-Butyl, Hexyl, Cyclohexyl, Phenyl, Naphthyl, Methoxy, Ethoxy oder tert.-Butoxy, steht,

wobei das Verhältnis von rac-Isomer zu meso-Isomer des Metallocens der Formel (A) im erfindungsgemäßen Katalysatorsystem zwischen 1:2 und 3:2 liegt.

4. Katalysatorsystem nach einem der Ansprüche 1 bis 3, **dadurch gekennzeichnet, daß** $R^9$ und $R^{10}$ in Formel (II) $C_1$-$C_{20}$-Alkyl, $C_1$-$C_{20}$-Halogenalkyl, $C_1$-$C_{10}$-Alkoxy, $C_6$-$C_{20}$-Aryl, $C_6$-$C_{20}$-Halogenaryl, $C_6$-$C_{20}$-Aryloxy, $C_7$-$C_{40}$-Arylalkyl, $C_7$-$C_{4O}$-Halogenarylalkyl, $C_7$-$C_{40}$-Alkylaryl oder $C_7$-$C_{40}$-Halogenalkylaryl sind.

5. Katalysatorsystem nach einem der Ansprüche 1 bis 3, **dadurch gekennzeichnet, daß** $R^{11}$ in Formel (V) $C_1$-$C_{20}$-Alkyl-, $C_6$-$C_{40}$-Aryl-, $C_7$-$C_{40}$-Arylalkyl oder $C_7$-$C_{40}$-Alkylaryl ist

6. Katalysatorsystem nach einem der Ansprüche 1 bis 5, **dadurch gekennzeichnet, daß** als Träger ein organischer oder anorganischer, inerter Feststoff eingesetzt wird.

7. Verfahren zur Herstellung von Polyolefinen durch Polymerisation von Propylen in Gegenwart eines Katalysatorsystems nach einem der Ansprüche 1 bis 6.

8. Verfahren gemäß Anspruch 7, **dadurch gekennzeichnet, daß** die Polymerisation von Propylen zusätzlich in Gegenwart von Wasserstoff erfolgt.

9. Verwendung eines Katalysatorsystems gemäß einem der Ansprüche 1 bis 6 zur Herstellung von Polypropylen.

## Claims

1. A catalyst system comprising

a) at least one substituted metallocene of the formula A

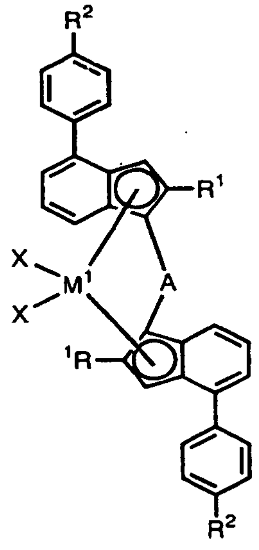

(A)

where

$R^1$ and $R^2$ are identical or different and are each a hydrogen atom, or a $C_1$-$C_{20}$-hydrocarbon group, with the proviso that $R^1$ is not methyl when $R^2$ is hydrogen,
$M^1$ is a transition metal of group 4, 5 or 6 of the Periodic Table of the Elements,
A is a bridge of the formula

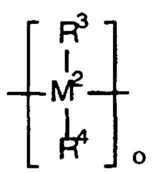

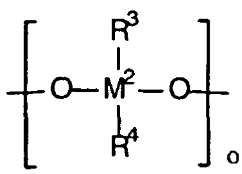

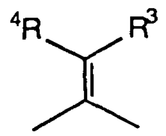

or $=BR^3$, $AlR^3$, -S-, -SO-, $-SO_2-$, $=NR^3$, $=PR^3$, $=P(O)R^3$, o-phenylene, 2,2'-biphenylene, where

$M^2$ is carbon, silicon, germanium, tin, nitrogen or phosphorus,
o is 1, 2, 3 or 4,
$R^3$ and $R^4$ are identical or different and are each, independently of one another, a hydrogen atom, halogen or a $C_1$-$C_{20}$ group or $R^3$ and $R^4$ may together form a monocyclic or polycyclic ring system, and
X are identical or different and are each a hydrogen atom, a halogen atom, a hydroxyl group, a $C_1$-$C_{10}$-alkyl group, a $C_6$-$C_{15}$-aryl group, a $C_1$-$C_{10}$-alkoxy group, a $C_6$-$C_{15}$-aryloxyl group, a benzyl group, an $NR^5_2$ group, where $R^5$ are identical or different and are each a $C_1$-$C_{10}$-alkyl group, a $C_6$-$C_{15}$-aryl group, a $(CH_3)_3Si$ group,

where the ratio of rac isomer to meso isomer of the metallocene of the formula (I) in the novel catalyst system is in the range from 1:10 to 2:1,
b)at least one Lewis base of the formula I,

$$M^3R^6R^7R^8 \qquad (I)$$

where
$R^6$, $R^7$ and $R^8$ are identical or different and are each a hydrogen atom, a $C_1$-$C_{20}$-alkyl group, a $C_1$-$C_{20}$-haloalkyl group, a $C_6$-$C_{40}$-aryl group, a $C_6$-$C_{40}$-haloaryl group, a $C_7$-$C_{40}$-alkylaryl group or a $C_7$-$C_{40}$-arylalkyl group, where two radicals or all three radicals $R^6$, $R^7$ and $R^8$ may be joined to one another via $C_2$-$C_{20}$ units and
$M^3$ is an element of main group V of the Periodic Table of the Elements,

c)a support,
d)at least one organoboroaluminum compound which is made up of units of the formula II

$$R_i^9M^4\text{-O-}M^4R_j^{10} \qquad (II)$$

where

$R^9$ and $R^{10}$ are identical or different and are each a hydrogen atom, a halogen atom, a $C_1$-$C_{40}$ group, or $R^9$ may be an -$OSiR_3$ group, where R are identical or different and are as defined for $R^9$,
$M^4$ are identical or different and are each an element of main group 3 of the Periodic Table of the Elements and i and j are each an integer 0, 1 or 2,

and is covalently bound to the support,
and, if desired,
e)an organometallic compound of the formula V

$$[M^5R^{11}{}_p]_k \qquad (V)$$

where

$M^5$ is an element of main group I, II or III of the Periodic Table of the Elements,
$R^{11}$ are identical or different and are each a hydrogen atom, a halogen atom or a $C_1$-$C_{40}$ group,
p is an integer from 1 to 3 and
k is an integer from 1 to 4.

**2.** A catalyst system as claimed in claim 1, wherein the compound of the formula (A)

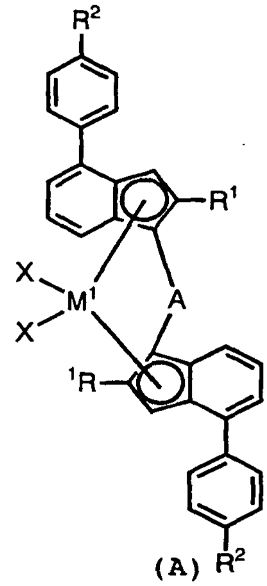

(A)

is one in which

$R^1$ and $R^2$ are identical or different and are each a hydrogen atom, a $C_1$-$C_{20}$-alkyl group, a $C_6$-$C_{14}$-aryl group or a $C_2$-$C_{20}$-alkenyl group, with the proviso that $R^1$ is not methyl when $R^2$ is hydrogen,
$M^1$ is a transition metal such as titanium, zirconium, hafnium, vanadium, niobium, tantalum, chromium, molybdenum or tungsten,
A is dimethylsilanediyl, dimethylgermanediyl, ethylidene, methylethylidene, 1,1-dimethylethylidene, 1,2-dimethylethylidene, tetramethylethylidene, isopropylidene, phenylmethylmethylidene or diphenylmethylidene,
X are identical or different and are each a hydrogen atom, fluorine, chlorine, bromine or iodine, a hydroxyl group, methyl, ethyl, propyl, isopropyl, n-butyl, isobutyl, sec-butyl, tert-butyl, hexyl, cyclohexyl, phenyl, naphthyl, methoxy, ethoxy, tert-butoxy or an $NR^5_2$ group, where $R^5$ are identical or different and are each methyl, ethyl, a chlorine atom or a fluorine atom, where the ratio of rac isomer to meso isomer of the metallocene of the formula (A) in the novel catalyst system is in the range from 1:2 to 3:2.

**3.** A catalyst system as claimed in claim 1 or 2, wherein the compound of the formula (A)

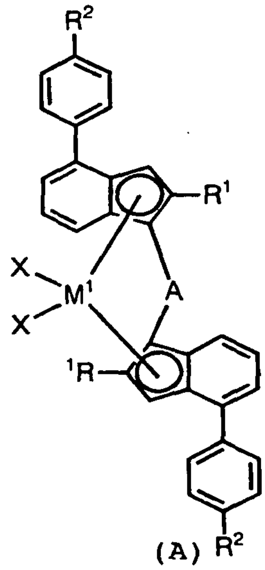

(A)

is one in which

$R^1$ and $R^2$ are identical or different and are each hydrogen, methyl, ethyl, n-propyl, isopropyl, n-butyl, sec-butyl, isobutyl, tert-butyl, pentyl or hexyl, with the proviso that $R^1$ is not methyl when $R^2$ is hydrogen,
$M^1$ is zirconium,
A is dimethylsilanediyl, dimethylgermanediyl or ethylidene,
X are identical or different and are each hydrogen, fluorine, chlorine, bromine, a hydroxyl group, methyl, ethyl, propyl, isopropyl, n-butyl, isobutyl, sec-butyl, tert-butyl, hexyl, cyclohexyl, phenyl, naphthyl, methoxy, ethoxy or tert-butoxy,
where the ratio of rac isomer to meso isomer of the metallocene of the formula (A) in the novel catalyst system is in the range from 1:2 to 3:2.

**4.** A catalyst system as claimed in any of claims 1 to 3, wherein $R^9$ and $R^{10}$ in formula (II) are $C_1$-$C_{20}$-alkyl, $C_1$-$C_{20}$-haloalkyl, $C_1$-$C_{10}$-alkoxy, $C_6$-$C_{20}$-aryl, $C_6$-$C_{20}$-haloaryl, $C_6$-$C_{20}$-aryloxy, $C_7$-$C_{40}$-arylalkyl, $C_7$-$C_{40}$-haloarylalkyl, $C_7$-$C_{40}$-alkylaryl or $C_7$-$C_{40}$-haloalkylaryl.

**5.** A catalyst system as claimed in any of claims 1 to 3, wherein $R^{11}$ in formula (V) is $C_1$-$C_{20}$-alkyl, $C_6$-$C_{40}$-aryl, $C_7$-$C_{40}$-arylalkyl or $C_7$-$C_{40}$-alkylaryl.

**6.** A catalyst system as claimed in any of claims 1 to 5, wherein the support used is an organic or inorganic, inert solid.

**7.** A process for preparing polyolefins by polymerization of propylene in the presence of a catalyst system as claimed in any of claims 1 to 6.

**8.** A process as claimed in claim 7, wherein the polymerization of proylene is carried out in the additional presence of hydrogen.

**9.** The use of a catalyst system as claimed in any of claims 1 to 6 for preparing polypropylene.

## Revendications

**1.** Système de catalyseur contenant

a) au moins un métallocène substitué de formule A

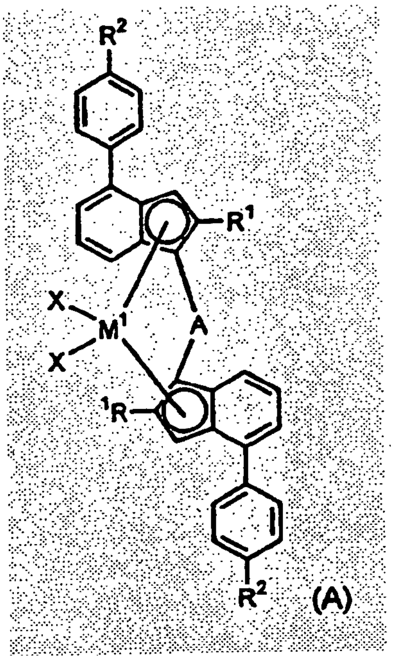

(A)

dans laquelle

$R^1$ et $R^2$ sont identiques ou différents et représentent un atome d'hydrogène ou un groupe hydrocarboné en $C_1$ à $C_{20}$, à condition que $R^1$ ne représente pas un groupe méthyle si $R^2$ représente un atome d'hydrogène,
$M^1$ représente un métal de transition du groupe 4, 5 ou 6 de la Classification Périodique des Eléments,
A est un élément pontant de formule

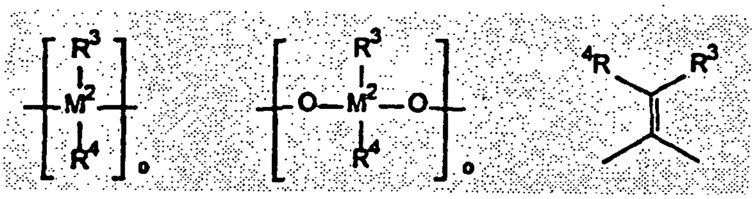

ou $=BR^3$, $AlR^3$, -S-, -SO-, $=NR^3$, $=PR^3$, $=P(O)R^3$, o-phénylène, 2,2'-biphénylène,
dans laquelle

$M^2$ représente un atome de carbone, de silicium, de germanium, d'étain, d'azote ou de phosphore,
o vaut 1, 2, 3 ou 4,
$R^3$ et $R^4$ sont identiques ou différents et représentent, indépendamment l'un de l'autre, un atome d'hydrogène, un atome d'halogène, un groupe hydrocarboné en $C_1$ à $C_{20}$ et $R^3$ et $R^4$ peuvent former ensemble un système mono- ou poly-cyclique, et
les X sont identiques ou différents et représentent un atome d'hydrogène, un atome d'halogène, un groupe hydroxyle, un groupe alkyle en $C_1$ à $C_{10}$, aryle en $C_6$ à $C_{15}$, alcoxy en $C_1$ à $C_{10}$, aryloxy en $C_6$ à $C_{15}$, un groupe benzyle, un groupe $NR^5_2$, où $R^5$ est identique ou différent et représente un groupe alkyle en $C_1$ à $C_{10}$, un groupe aryle en $C_6$ à $C_{15}$, un groupe $(CH_3)_3Si$,

le rapport du rac-isomère au méso-isomère du métallocène de formule (A) dans le système de catalyseur selon

la présente invention étant compris entre 1:10 et 2:1,
b) au moins une base de Lewis de formule I

$$M^3R^6R^7R^8 \qquad (I)$$

dans laquelle

$R^6$, $R^7$ et $R^8$ sont identiques ou différents et représentent un atome d'hydrogène, un groupe alkyle en $C_1$ à $C_{20}$, halogénoalkyle en $C_1$ à $C_{20}$, aryle en $C_6$ à $C_{40}$, halogénoaryle en $C_6$ à $C_{40}$, alkylaryle en $C_7$ à $C_{40}$, arylalkyle en $C_7$ à $C_{40}$, deux groupes ou les trois groupes $R^6$, $R^7$ et $R^8$ pouvant éventuellement être reliés entre eux par l'intermédiaire de motifs carbone en $C_2$ à $c_{20}$ et
$M^3$ représente un élément du groupe principal V de la Classification Périodique des Eléments,

c) un support,
d) au moins un composé organoboroaluminique qui est constitué de motifs de formule II

$$R_i^9M^4\text{-O-}M^4R_j^{10} \qquad (II)$$

dans laquelle

$R^9$ et $R^{10}$ sont identiques ou différents et représentent un atome d'hydrogène, un atome d'halogène, un groupe hydrocarboné en $C_1$ à $C_{40}$, ou bien $R^9$ peut représenter un groupe $-OSiR_3$, où R est identique ou différent et a la même signification que $R^9$,
les $M^4$ sont identiques ou différents et représentent un élément du groupe principal 3 de la Classification Périodique des Eléments et
i et j représentent chacun un nombre entier parmi 0, 1 ou 2,

et qui est relié au support de manière covalente,
ainsi qu'éventuellement
e) un composé organométallique de formule V

$$[M^5R^{11}_p]_k \qquad (V)$$

dans laquelle

$M^5$ représente un élément des groupes principaux I, II et III de la Classification Périodique des Eléments,
$R^{11}$ est identique ou différent et représente un atome d'hydrogène, un atome d'halogène ou un groupe hydrocarboné en $C_1$ à $C_{40}$,
p représente un nombre entier de 1 à 3 et
k représente un nombre entier de 1 à 4.

**2.** Système de catalyseur selon la revendication 1, **caractérisé en ce que** le composé de formule (A)

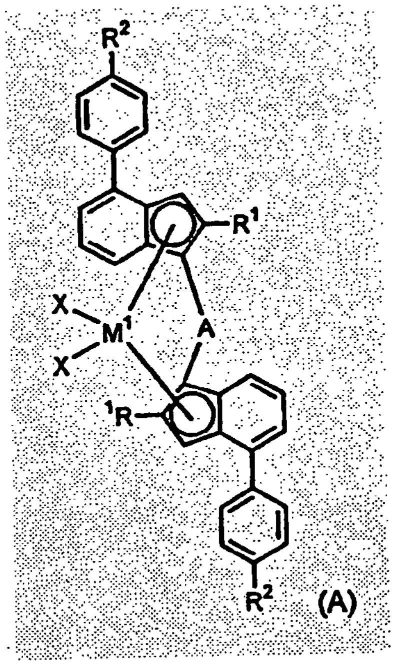

(A)

dans laquelle

$R^1$ et $R^2$ sont identiques ou différents et représentent un atome d'hydrogène, un groupe alkyle en $C_1$ à $C_{20}$, un groupe aryle en $C_6$ à $C_{14}$, un groupe alcényle en $C_2$ à $C_{20}$, à condition que $R^1$ ne représente pas un groupe méthyle si $R^2$ représente un atome d'hydrogène,
$M^1$ représente un métal de transition tel que le titane, le zirconium, l'hafnium, le vanadium, le niobium, le tantale, le chrome, le molybdène ou le tungstène,
A représente un groupe diméthylsilandiyle, diméthylgermandiyle, éthylidène, méthyléthylidène, 1,1-diméthyléthylidène, 1,2-diméthyléthylidène, tétraméthyléthylidène, isopropylidène, phénylméthylméthylidène ou diphénylméthylidène,
les X sont identiques ou différents et représentent un atome d'hydrogène, de fluor, de chlore, de brome ou d'iode, un groupe hydroxyle, méthyle, éthyle, propyle, iso-propyle, n-butyle, iso-butyle, sec-butyle, tert-butyle, hexyle, cyclohexyle, phényle, naphtyle, méthoxy, éthoxy, tert-butoxy, un groupe $NR^5_2$, où $R^5$ est identique ou différent et représente un groupe méthyle et/ou éthyle, un atome de chlore, un atome de fluor,

le rapport du rac-isomère au méso-isomère du métallocène de formule (A) dans le catalyseur selon la présente invention étant compris entre 1:2 et 3:2.

**3.** Système de catalyseur selon la revendication 1 ou 2, **caractérisé en ce que** le composé de formule (A)

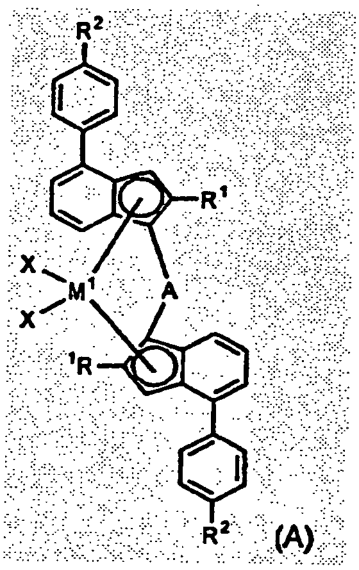

(A)

dans laquelle

$R^1$ et $R^2$ sont identiques ou différents et représentent un atome d'hydrogène, un groupe méthyle, éthyle, n-propyle, iso-propyle, n-butyle, sec-butyle, iso- butyle, tert-butyle, pentyle et hexyle, à condition que $R^1$ ne représente pas un groupe méthyle si $R^2$ représente un atome d'hydrogène,
$M^1$ représente un atome de zirconium,
A représente un groupe diméthylsilandiyle, diméthylgermandiyle ou éthylidène,
les X sont identiques ou différents et représentent un atome d'hydrogène, de fluor, de chlore, de brome, un groupe hydroxyle, méthyle, éthyle, propyle, iso-propyle, n-butyle, iso-butyle, sec-butyle, tert-butyle, hexyle, cyclohexyle, phényle, naphtyle, méthoxy, éthoxy ou tert-butoxy,

le rapport du rac-isomère au méso-isomère du métallocène de formule (A) dans le système de catalyseur selon la présente invention étant compris entre 1:2 et 3:2.

**4.** Système de catalyseur selon l'une des revendications 1 à 3, **caractérisé en ce que** $R^9$ et $R^{10}$ dans la formule (II) représentent un groupe alkyle en $C_1$ à $C_{10}$, halogénoalkyle en $C_1$ à $C_{20}$, alcoxy en $C_1$ à $C_{10}$, aryle en $C_6$ à $C_{20}$, halogénoaryle en $C_6$ à $C_{20}$, aryloxy en $C_6$ à $C_{20}$, arylalkyle en $C_7$ à $C_{40}$, halogénoarylalkyle en $C_7$ à $C_{40}$, alkylaryle en $C_7$ à $C_{40}$ ou halogénoalkylaryle en $C_7$ à $C_{40}$

**5.** Système de catalyseur selon l'une des revendications 1 à 3, **caractérisé en ce que** $R^{11}$ dans la formule (V) représente un groupe alkyle en $C_1$ à $C_{20}$, aryle en $C_6$ à $C_{40}$, arylalkyle en $C_7$ à $C_{40}$ ou alkylaryle en $C_7$ à $C_{40}$.

**6.** Système de catalyseur selon l'une des revendications 1 à 5, **caractérisé en ce que** l'on met en oeuvre, en tant que support, un solide inerte organique ou inorganique.

**7.** Procédé de production de polyoléfines par polymérisation de propylène en présence d'un système de catalyseur selon l'une des revendications 1 à 6.

**8.** Procédé selon la revendication 7, **caractérisé en ce que** l'on réalise la polymérisation du propylène en outre en présence d'hydrogène.

**9.** Utilisation d'un système de catalyseur selon l'une des revendications 1 à 6 pour la production de polypropylène.